(19) Europäisches Patentamt

European Patent Office

Office européen des brevets

(11) Veröffentlichungsnummer: **0 111 118**
**B1**

(12) **EUROPÄISCHE PATENTSCHRIFT**

(45) Veröffentlichungstag der Patentschrift:
07.01.88

(21) Anmeldenummer: 83110571.3

(22) Anmeldetag: 22.10.83

(51) Int. Cl.⁴: **B 60 C 15/02**

(54) **Fahrzeugrad.**

(30) Priorität: 27.11.82 DE 3244046

(43) Veröffentlichungstag der Anmeldung:
20.06.84 Patentblatt 84/25

(45) Bekanntmachung des Hinweises auf die Patenterteilung:
07.01.88 Patentblatt 88/1

(84) Benannte Vertragsstaaten:
AT BE CH DE FR GB IT LI LU NL SE

(56) Entgegenhaltungen:
CH - A - 635 538
DE - A - 2 361 975
FR - A - 2 433 426
GB - A - 2 030 087
GB - A - 2 061 199

(73) Patentinhaber: **Continental Gummi-Werke
Aktiengesellschaft, Königsworther Platz 1,
D-3000 Hannover 1 (DE)**

(72) Erfinder: **Mauk, Gerhard, Dipl.-Ing., Bleichenstrasse 49 A
II, D-3050 Wunstorf 1 (DE)**
Erfinder: **Huinink, Heinrich, Dipl.-Ing.,
Elbingerstrasse 2 F, D-3008 Garbsen 1 (DE)**
Erfinder: **Seitz, Hans, Dr. Dipl.-Ing.,
Grafenbergerstrasse 5 b, D-3012 Langenhagen 1 (DE)**
Erfinder: **Frerichs, Udo, Buchenweg 7,
D-3012 Langenhagen 8 (DE)**
Erfinder: **Rach, Heinz-Dieter, Planetenring 32,
D-3008 Garbsen 1 (DE)**
Erfinder: **Poqué, Dionysius, Dipl.-Ing., Meischenfeld 17,
D-5100 Aachen (DE)**

## Beschreibung

Die Erfindung betrifft ein luftbereiftes Fahrzeugrad gemäss dem Oberbegriff von Patentanspruch 1. Die Erfindung bezieht sich auch auf ein Fahrzeugrad, bei dem die Felge sich im wesentlichen radial nach aussen erstreckende Felgenhörner und neben diesen am radial äusseren Umfang Sitzflächen für den Gürtelreifen aufweist.

Ein Fahrzeugrad der zuerst genannten Art ist z. B. aus der DE-A-3 000 428 bekannt. Bei diesem bekannten Rad befinden sich neben den Felgensitzflächen für die Reifenwülste Vertiefungen, die eine Montage des Reifens bei einteiligen Felgen ermöglichen, indem der Reifen zunächst mit einem Teil eines Wulstes in eine solche Vertiefung eingebracht und dann auf der gegenüberliegenden Seite über das Felgenhorn hinweggeschoben wird.

Für bestimmte Zwecke können die bekannten Vertiefungen sich nachteilig auswirken, z. B. wenn man auf der radial äusseren Seite der Felge möglichst grosse Stützflächen oder ein übliches Tiefbett ausbilden will.

Der Erfindung liegt deshalb die Aufgabe zugrunde, ein Fahrzeugrad der eingangs genannten Art dahingehend weiterzuentwickeln, dass man den Reifen auch ohne die bekannten Vertiefungen montieren kann. Diese Aufgabe wird mit den im Anspruch angegebenen Merkmalen gelöst.

In der GB-A-2 061 199 ist bereits ein luftbereiftes Fahrzeugrad mit einer starren einteiligen Felge und einem Gürtelreifen mit einer ein- oder mehrlagigen Karkasse und mit zugfesten Kernringen in den Wülsten beschrieben, bei dem die Felge sich im wesentlichen radial nach aussen erstreckende Felgenhörner und neben diesen am radial äusseren Umfang Sitzflächen für den Gürtelreifen aufweist, wobei beim montierten Reifen der Abstand «a» vom Mittelpunkt des Kernquerschnitts zum radial inneren Wulstrand grösser ist als der Abstand «b» zu einem axialen Wulstrand, so dass der Kernring in diesem Bereich des Wulstes exzentrisch gelagert ist, wobei der Wulst bei der Montage des Reifens lediglich zur Überwindung eines Verankerungsbereichs der Felge drehbar und/ oder verschwenkbar ist, und dass seine Drehung oder Schwenkung aus der Montagestellung in die Betriebsstellung des Reifens in seinem Sitzflächenbereich erfolgen kann.

Bei diesem bekannten Fahrzeugrad dient ein übliches Felgentiefbett dazu, den Reifen unter Überwindung der Felgenhörner auf eine einteilige Felge montieren zu können. Dabei benötigt das Tiefbett eine relativ grosse radiale Tiefe, weil die Felgenhörner im Vergleich zum Durchmesser der Wulstkernringe sehr hoch gewählt sind. Zur Überwindung der Felgenhörner werden die Reifenwülste nicht verschwenkt, sondern in üblicher Weise in das Tiefbett eingetaucht. Lediglich zur Überwindung von Verankerungsbereichen, die bei dem bekannten Fahrzeugrad als Wulstsitzsicherung dienen, werden die Reifenwülste gedreht.

Auch hier stellt sich die Aufgabe, das bekannte Fahrzeugrad dahingehend weiterzuentwickeln, dass man den Reifen auch ohne das übliche Tiefbett auf eine einteilige Felge montieren kann. Diese Aufgabe wird mit den im Anspruch 20 angegebenen Merkmalen gelöst.

Der Kerngedanke der Erfindung besteht darin, den Wulstkern exzentrisch im Wulst anzuordnen, und zwar bezüglich der in der Betriebsstellung des Reifens vom Kernquerschnittsmittelpunkt axial nach innen und zur Sitzfläche weisenden Richtungen. Im Rahmen dieser Erfindung soll «Betriebsstellung» (= montierte Stellung) die Stellung der Reifenwülste relativ zur Felge bezeichnen, die der Reifen im fertigmontierten und aufgepumpten Zustand einnimmt, während unter «Montagestellung» eine um ca. 90° dazu verschwenkte Stellung der Reifenwülste verstanden werden soll. Der Kerngedanke der Erfindung ist wohl bei radial innen als auch bei radial aussen an der Felge angebrachten Reifen anwendbar, wenn auch die bevorzugten Ausführungsbeispiele einen am radial inneren Umfang der Felge befestigten Reifen vorsehen.

Die Montagestellung eines Wulstes wird dadurch erreicht, dass entweder der Wulst durch Herumziehen von Seitenwandteilen um eine Achse ausserhalb des Wulstkerns verschwenkt oder um eine Achse durch den Kernquerschnittsmittelpunkt gedreht oder mit einer Relativbewegung zwischen dem Kern und dem ihn umgebenden Wulstmaterial um den Kern gedreht wird, oder durch eine aus diesen drei Bewegungen kombinierte Bewegung.

Gegenüber der Betriebsstellung ist in der Montagestellung der Abstand vom Kernquerschnittsmittelpunkt zum der Sitzfläche zugekehrten Wulstrand kleiner, so dass der Reifendurchmesser in dieser Stellung und in diesem Bereich (Wulstdurchmesser) um den zweifachen Differenzbetrag kleiner bzw. grösser ist. Damit ergibt sich aber zwischen Reifenwulst und Felgensitzfläche genügend Raum zur Montage des Reifens, der, nachdem er über die Felgenhörner gehoben worden ist, in die Betriebsstellung zurückgeschwenkt wird.

Die Erfindung bietet den Vorteil, dass man bei kleineren Reifengrössen aufgrund der weggefallenen Felgenabschnitte mit den Vertiefungen schmalere Felgen einsetzen kann, so dass sich auch eine Gewichtsersparnis ergibt.

Bei den Ausführungsarten, bei denen jeder Reifenwulst auf der axial inneren Seite an im Querschnitt im wesentlichen senkrecht verlaufenden Teilen der Felge anliegt und bei denen der von diesen Teilen, der Felgensitzfläche und dem Felgenhorn begrenzte Raum im wesentlichen formschlüssig ausgefüllt wird, ergibt sich der Vorteil einer Einsparung von Abdeckringen zur Verhinderung des Eindringens von Spritzwasser und Schmutz.

Vorteilhafte Ausgestaltungen der Erfindung sind den Unteransprüchen zu entnehmen.

Nachfolgend werden mehrere Ausführungsbeispiele der Erfindung anhand einer Zeichnung beschrieben. Es zeigt

Fig. 1 ein Fahrzeugrad in einem radialen Teilschnitt,

Fig. 2 einen Ausschnitt des Rades gemäss Fig. 1 mit dem Reifen in Betriebsstellung,

Fig. 3 einen Ausschnitt des Rades gemäss Fig. 1 mit einem Reifen in Montagestellung, Achsen von Felge und Reifen nicht in Deckung,

Fig. 4 den Radausschnitt gemäss Fig. 2, Achsen von Rad und Reifen jedoch in Deckung,

Fig. 5 einen Radausschnitt mit einer Felge mit gekrümmter Felgensitzfläche,

Fig. 6 einen Radausschnitt mit einem Reifen, bei dem in Betriebsstellung der Abstand vom Kernquerschnittsmittelpunkt zum axial äusseren Wulstrand kleiner ist als zum radial äusseren,

Fig. 7 einen radialen Teilschnitt durch eine Felge mit beidseitig abgedeckten Bereichen für die Reifenwülste,

Fig. 8 eine Felge mit einer optimalen Stützfläche radial aussen,

Fig. 9 ein Fahrzeugrad, bei dem die Reifenwülste sich radial aussen an der Felge befinden, in einem radialen Teilschnitt.

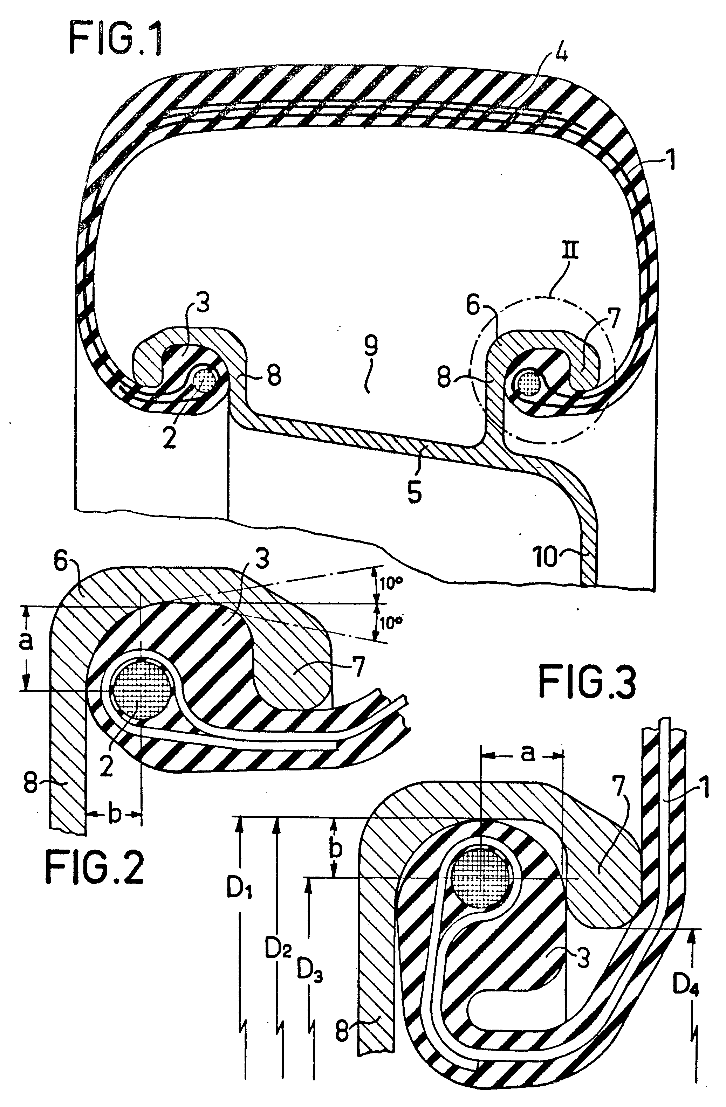

In Fig. 1 ist ein Fahrzeugrad im montierten Zustand dargestellt. Ein Gürtelreifen mit einer Radialkarkasse 1 – gegebenenfalls kann auch eine Winkelkarkasse verwendet werden –, die mit ihren Enden durch Umschlingen der Wulstkerne 2 in den Wülsten 3 verankert ist, und mit einem üblichen Gürtel 4 ist derart auf einer Felge 5 montiert, dass die Wulstsitzflächen sich auf radial innen vom Felgenkranz 6 gelegenen Sitzflächen neben den nach innen sich erstreckenden Felgenhörnern 7 auf der Felge 5 befinden.

Die Reifenwülste 3 füllen im wesentlichen formschlüssig einen Raum aus, der von den Felgenhörnern 7, den Felgensitzflächen und von im Querschnitt im wesentlichen senkrecht verlaufenden Teilen 8 des Felgenkranzes 6 begrenzt wird. Durch die senkrechten Teile 8 wird auf der radial äusseren Seite der Felge 5 ein übliches Tiefbett 9 gebildet, das bei sehr breiten Reifen dazu dienen kann, den Reifen bei der Montage leichter über die einteilige Felge 5 zu bewegen.

Der eine Reifenwulst 3, der durch eine sich extrem erwärmende Bremse oder sogar durch Funkenflug besonders gefährdet wäre, wird beim Rad nach Fig. 1 durch die weit axial aussen auf Höhe des einen Felgenhorns 7 verlaufende Felgenschüssel 10 geschützt.

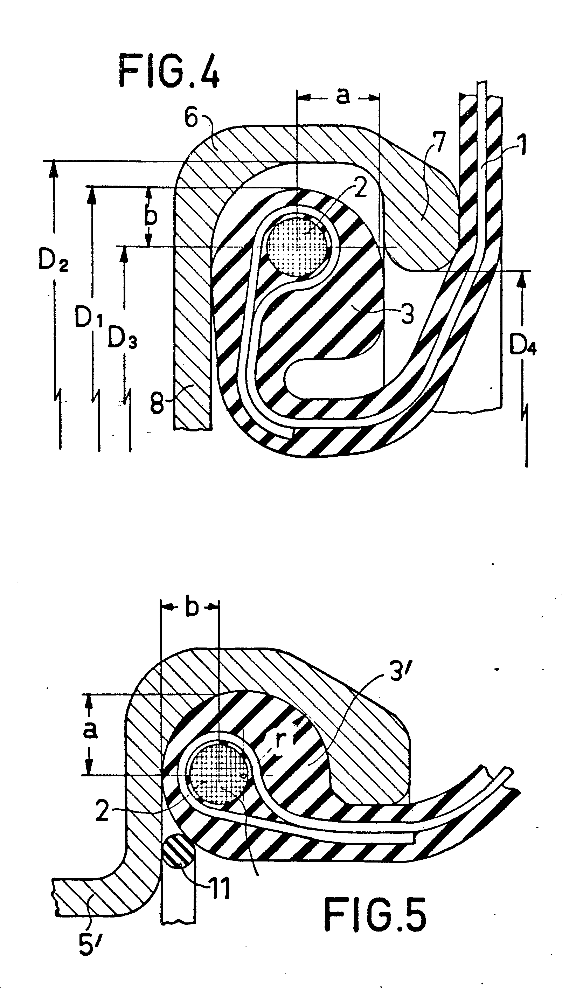

Fig. 2 stellt einen vergrösserten Ausschnitt des Rades nach Fig. 1 im Bereich des gestrichelten Kreises dar. Damit ein Reifen bei einem Rad nach Fig. 1 und 2 überhaupt auf eine einteilige Felge 5, die im Gegensatz zu bekannten Felgen neben den Felgensitzflächen für die Wülste 3 keine Vertiefugen aufweist, montierbar ist, ist es wichtig, dass er die nachfolgenden Merkmale aufweist. Zunächst ist der Wulstkern 2 exzentrisch im Reifenwulst 3 gelagert, in dem Sinne, dass beim montierten Reifen der Abstand vom Mittelpunkt des Kernquerschnitts zum radial äusseren Wulstrand (a) grösser ist als der zum axial inneren Wulstrand (b). Weiterhin ist es erforderlich, den Reifen in seinem Wulstbereich schwenkbar bzw. drehbar um eine Achse auszubilden, die in Reifenumfangsrichtung weist, und zwar in dem Ausmass, dass der Reifen auf der Felge 5 eine Montagestellung einnehmen kann, bei der der Reifenwulst 3 gegenüber der Betriebsstellung um ca. 90° verschwenkt bzw. verdreht ist (Fig. 3 und 4). Diese Schwenk- bzw. Drehbarkeit kann durch eine oder mehrere der nachfolgenden Einzelbewegungen erzielt werden. Zum einen ist der Wulst 3 durch Nachziehen von Seitenwandteilen um einen gewissen Winkel um eine Achse schwenkbar, die ausserhalb des Wulstkerns 2 oder sogar ausserhalb des Wulstes 3 liegt. Der Schwenkwinkel hängt dabei von der Länge der Reifenseitenwand und ihrer inneren Steifigkeit ab. Zum anderen ist eine Drehung um eine durch den Kernquerschnittsmittelpunkt gehende Achse dadurch möglich, dass der Wulst 3 streckenweise um einen gewissen Winkel verdrillbar ist, der von den Materialeigenschaften und dem Aufbau des Wulstkerns 2 und des übrigen Wulstes 3 abhängt. Schliesslich ist eine erleichterte Drehbewegung des Wulstes 3 um den Wulstkern 2 dadurch erzielbar, dass der Wulstkern 2 nichthaftend in den Wulst 3 eingebettet wird, z.B. durch Umwickeln mit einem Gewebestreifen, der – gegebenenfalls nach entsprechender Vorbehandlung – eine Haftung mit dem benachbarten Material verhindert.

In Fig. 2 ist noch angedeutet, dass die wesentlichen Teile der Felgensitzflächen und wegen der Formschlüssigkeit auch der Wulstsitzflächen in Querrichtung gerade, und zwar waagerecht oder auch geneigt verlaufen können, mit einer Neigung, die nicht um mehr als 10° von der Waagerechten abweichen sollte.

Bei dem Radausschnitt nach Fig. 3 befindet sich der Reifen in der Montagestellung, bei der die Wülste 3 gegenüber der montierten Stellung um ca. 90° verschwenkt oder verdreht sind, so dass der Bereich mit dem Abstand b nach radial aussen zeigt. Bezeichnet man den Reifendurchmesser in dieser Stellung und in diesem Bereich (Wulstdurchmesser) mit $D_1$ und den mittleren Felgendurchmesser im Bereich der Sitzflächen mit $D_2$, so gilt die Beziehung $D_2 = D_1 + 2(a - b)$. Wird weiterhin ein Reifen mit einem Mittendurchmesser $D_3$ für die Kernringe 2 gewählt, der gleich oder wenig grösser ist als der von den sich nach innen erstreckenden Felgenhörnern 7 gebildete kleinste Durchmesser $D_4$ (Mit der letzten Bedingung wird eine sichere Verankerung des Reifens hinter den Felgenhörnern 7 und damit eine hohe Abwerfsicherheit erzielt), ist eine Montage des Reifens auf folgende Weise möglich.

Nachdem die Felge 5 mit ihrer Drehachse senkrecht zur Drehachse des Reifens in den Innenraum des Reifens bewegt und dort um 90° gedreht worden ist, wird zunächst ein Wulst 3 um ca. 90° verschwenkt bzw. verdreht, so dass der Bereich mit dem Abstand b nach radial aussen zeigt. Dann wird der Wulst 3 an einer Stelle vollständig in den vom Felgenhorn 7, der Felgensitzfläche und dem senkrechten Felgenteil 8 begrenzten Raum eingetaucht (Fig. 3). Dadurch wird es möglich, auf der gegenüberliegenden Seite den Wulst 3 über das Felgenhorn 7 hinwegzuheben. Danach wird der Reifen so weit aus der eingetauchten Stellung zurückgezogen, dass die Drehachsen von Reifen und Felge 5 sich decken (Fig. 4). Schliesslich wird der Wulst 3 um ca. 90° verschwenkt, so dass er die Betriebsstellung einnimmt (Fig. 2), und mit dem zweiten Wulst 3 entsprechend verfahren.

Versuche haben ergeben, dass es für eine Montagefähigkeit des Reifens ausreicht, wenn der Abstand b um etwa das ¼-fache bis ¾-fache des Kernquerschnittsdurchmessers kleiner gewählt wird als der Abstand a. So wurden bei einem Radialreifen der Grösse 175 SR 14, dessen Kernquerschnittsdurchmesser ca. 7 mm betrug, die Abstände a und b derart gewählt, dass die Differenz im Bereich 2 bis 5 mm, bevorzugt bei 3,5 mm lag.

In Fig. 5 ist ein Ausschnitt eines Rades dargestellt, das sich von dem vorstehend beschriebenen vor allem dadurch unterscheidet, dass die Felgen- und Wulstsitzflächen im Querschnitt kreisbogenförmig ausgebildet sind. Bezeichnet man den Radius des Kreisbogens mit r, dann ist die Exzentrizität des im Wulst 3' eingebetteten Kerns 2 durch die Länge $r-b$ gegeben, und es gilt $r-b \chi a-b$. Bezüglich der Montage des Reifens gelten die beim Rad nach Fig. 1 bis 4 gemachten Ausführungen entsprechend. Beim Rad nach Fig. 5 ist weiterhin ein elastischer Dichtring 11 montiert, der zur Abweisung von Spritzwasser und Schmutz dient und darüber hinaus durch entsprechende Steifigkeit so ausgebildet sein kann, dass er bei einem Notlauf den Reifenwulst 3' selbsthemmend sperrt und damit einen Abwurf von der Felge 5' verhindert.

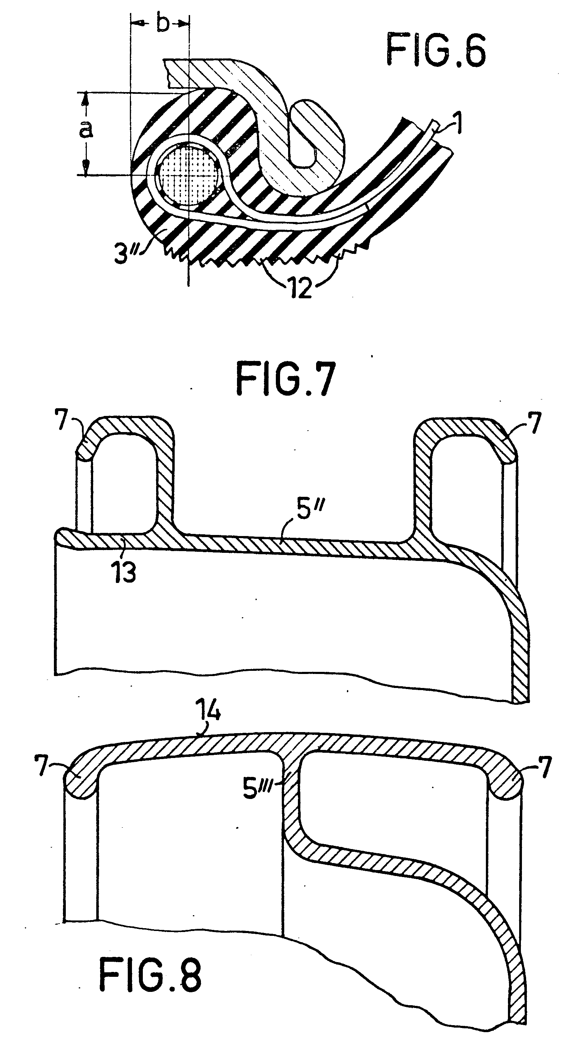

Das Rad gemäss Fig. 6 unterscheidet sich von dem nach Fig. 5 vor allem dadurch, dass in der montierten Stellung des Reifens der Abstand vom Mittelpunkt des Kernquerschnitts zum axial aussen gelegenen Wulstrand kleiner ist als der Abstand vom Mittelpunkt zum radial aussen gelegenen Wulstrand a. Weiterhin sind im Wulstbereich 3" und gegebenenfalls im benachbarten Bereich auf der radial inneren Seite des Reifens Vorsprünge 12 vorhanden, die einer erleichterten Demontage des Reifens dienen.

Eine erleichterte Reifenmontage kann auch dadurch erzielt werden, dass der Reifen nicht wie üblich in einer Stellung vulkanisiert wird, die der Betriebsstellung auf der Felge entspricht, sondern in einer solchen, die bezüglich der Wülste 3, 3', 3" zwischen der Betriebsstellung und der Montagestellung liegt. Als besonders günstig hat sich eine Vulkanisierstellung mit um ca. 45° geschwenkten Wülsten 3, 3', 3" herausgestellt. Ein solcher Reifen ist relativ leicht in die Montagestellung zu bewegen und dreht sich bei der Beaufschlagung mit Luft von allein in die Betriebsstellung. Vor allem zeigt er aber den Vorteil, dass er aufgrund der Vorspannung im Bereich der Wülste 3, 3', 3" bei Luftverlust von allein seine Betriebsstellung verlässt und ohne grossen Kraftaufwand demontiert werden kann.

In Fig. 7 ist eine weitere bevorzugte Felgenform 5" dargestellt. Sie unterscheidet sich von der nach Fig. 1 dadurch, dass auch der beim zweiten Felgenhorn 7 befindliche (nicht gezeichnete) Reifenwulst durch ein ringförmiges Verlängerungsteil 13 in Richtung nach radial innen verdeckt wird. Als weiterer Unterschied sind die schräg nach innen gestellten Felgenhörner 7 zu nennen, die teilweise die Funktion von Felgensitzflächen übernehmen. Schräg nach innen bedeutet in diesem Zusammenhang, dass die Felgenhörner sich nicht genau nach radial innen erstrecken, sondern in einer Richtung liegen, die durch eine Radialkomponente und eine axial nach aussen weisende Komponente zusammensetzbar ist.

Fig. 8 zeigt eine Felge 5''', bei der die radial äusseren Stützflächen 14 für einen Notlauf gegenüber den vorstehend beschriebenen Felgen 5, 5', 5" optimiert sind. Die Felge 5''' verläuft radial aussen in Querrichtung leicht gewölbt, so dass praktisch ihr gesamter Aussenmantel als Stützfläche 14 wirkt.

Es ist bereits angemerkt worden, dass für das erfindungsgemässe Rad sowohl Reifen mit einer Radial- als auch solche mit einer Diagonalkarkasse verwendbar sind. Durch die im Reifeninnenraum liegenden Felgenhörner und die dabei für den Reifen entstehenden grossen Federwege ist es möglich, Reifen mit extrem niedrigen Querschnittswerten einzusetzen, deren Höhen–Breitenverhältnis zwischen 0,3 und 0,7 liegen kann (übliche Definition von H und B). Wegen des vereinfachten Reifenaufbaus vor allem im Bereich der weniger beanspruchten Wülste kommt für die Herstellung des Reifens ein Giessverfahren in Frage. Weiterhin ist es selbstverständlich möglich, Einzelkomponenten der Reifen bzw. Felgen der unterschiedlichen Figuren miteinander zu kombinieren. Schliesslich sollte angemerkt werden, dass die Erfindung auch bei Diagonalreifen ohne Gürtel anwendbar ist.

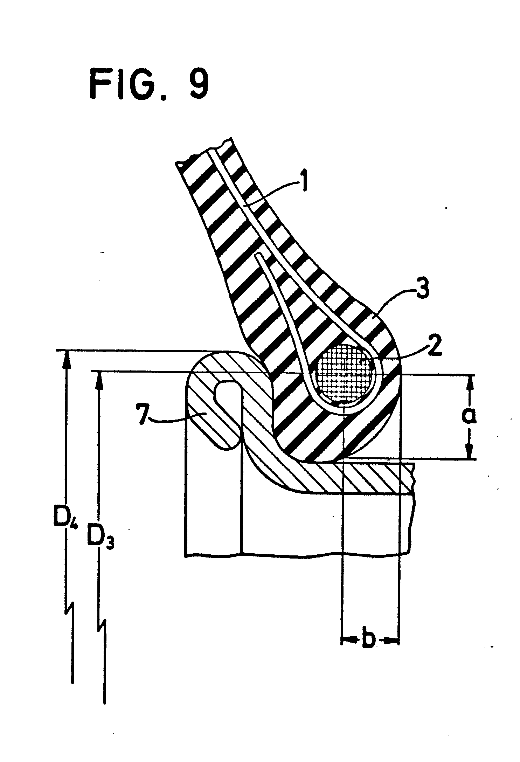

In Fig. 9 ist ein Fahrzeugrad in einem radialen Teilschnitt im Bereich des einen Reifenwulstes 3 dargestellt. Während in den vorstehenden Beispielen gemäss Fig. 1 bis 8 die Reifenwülste 3 sich radial innen an der Felge befinden, sind sie beim Rad nach Fig. 9 radial aussen neben sich nach radial aussen erstreckenden Felgenhörnern 7 angeordnet.

Um auch hier die Exzenterwirkung zur Einsparung von Montagetiefungen eintreten zu lassen, muss der Reifendurchmesser im Bereich der Wülste 3 durch das Drehen der Wülste 3 bei der Montage derart vergrösserbar sein, dass der Reifenwulst 3 sich nach dem Aufbringen eines Teilumfangs eines Wulstes 3 auf die zugehörige Felgensitzfläche auf der gegenüberliegenden Seite über das Felgenhorn 7 heben lässt. Alle anderen Überlegungen bezüglich der Konstruktion von Reifen und Felge entsprechen denen bei den vorstehenden Beispielen.

## Patentansprüche

1. Luftbereiftes Fahrzeugrad mit einer starren einteiligen Felge (5) und einem Gürtelreifen mit einer ein- oder mehrlagigen Karkasse (1) und mit zug- und/oder druckfesten Kernringen (2) in den Wülsten (3, 3', 3''), bei dem die Felge (5) sich im wesentlichen radial nach innen erstreckende Felgenhörner (7) und neben diesen am radial inneren Umfang Sitzflächen für den Gürtelreifen aufweist, wobei der Mittendurchmesser ($D_3$) der Kernringe (2) gleich gross oder wenig grösser ist als der von den sich radial nach innen erstreckenden Felgenhörnern (7) gebildete kleinste Durchmesser ($D_4$), dadurch gekennzeichnet, dass beim montierten Reifen der Abstand «a» vom Mittelpunkt des Kernquerschnitts zum radial äusseren Wulstrand grösser ist als der Abstand «b» zum axial inneren Wulstrand, so dass der Kernring (2) in diesem Bereich des Wulstes exzentrisch gelagert ist, dass der Wulst (3, 3', 3'') bei der Montage des Reifens um eine in Reifenumfangsrichtung weisende Achse drehbar und/oder verschwenkbar ist, und dass die Differenz der Abstände «a» und «b» derart gewählt ist, dass in der Montagestellung des Reifens der radial äussere Reifendurchmesser ($D_1$) im Wulstbereich um soviel kleiner ist als der Durchmesser ($D_2$) im Stützflächenbereich, dass der Reifen über das jeweilige Felgenhorn (7) hebbar ist.

2. Rad nach Anspruch 1, dadurch gekennzeichnet, dass jeder Wulst (3) auf der axial inneren Seite an im Querschnitt im wesentlichen radial verlaufenden Teilen (8) der Felge (5) anliegt und dass der von diesen Teilen (8), der Felgensitzfläche und dem Felgenhorn (7) begrenzte Raum formschlüssig ausgefüllt wird.

3. Rad nach Anspruch 1, dadurch gekennzeichnet, dass der Durchmesser ($D_1$) um das ½-fache bis ¾-fache des Kernquerschnittsdurchmessers kleiner ist als der mittlere Durchmesser ($D_2$) der Felge (5) im Bereich der Felgensitzflächen.

4. Rad nach Anspruch 1, dadurch gekennzeichnet, dass die beiden angegebenen Abstände «a» und «b» sich um das ¼-fache bis ¾-fache des Kernquerschnittsdurchmessers unterscheiden.

5. Rad nach Anspruch 1, dadurch gekennzeichnet, dass die Zwischenwerte der Abstände zwischen den beiden angegebenen, senkrecht zueinander stehenden Abständen «a» und «b» sich stetig ändern, so dass der Wulstrand in diesem Bereich im Querschnitt auf einer gekrümmten Kurve verläuft.

6. Rad nach Anspruch 5, dadurch gekennzeichnet, dass beim montierten Reifen der Abstand vom Mittelpunkt des Kernquerschnitts zum axial aussen gelegenen Wulstrand grösser ist als der Abstand «a» vom Mittelpunkt zum radial aussen gelegenen Wulstrand.

7. Rad nach Anspruch 5, dadurch gekennzeichnet, dass beim montierten Reifen der Abstand vom Mittelpunkt des Kernquerschnitts zum axial aussen gelegenen Wulstrand kleiner ist als der Abstand «a» vom Mittelpunkt zum radial aussen gelegenen Wulstrand.

8. Rad nach Anspruch 1, dadurch gekennzeichnet, dass die Wülste (3, 3') um eine durch den Mittelpunkt des Kernquerschnitts gelegte Achse drehbar sind, und zwar um einen Winkel zwischen 45° und 90°.

9. Rad nach Anspruch 1, dadurch gekennzeichnet, dass die Wülste (3, 3') mit Winkeln zwischen 45° und 90° um ihren Kern drehbar sind, und zwar mit einer Relativbewegung an der Grenzfläche zwischen dem Kernring (2) und dem ihn umgebenden Wulstmaterial.

10. Rad nach Anspruch 1, gekennzeichnet durch einen Reifen mit einem Höhen–Breitenverhältnis von 0,3 bis 0,7.

11. Rad nach Anspruch 1, dadurch gekennzeichnet, dass der Reifen durch Giessen hergestellt ist.

12. Rad nach Anspruch 1, dadurch gekennzeichnet, dass die Vulkanisierstellung des Reifens bezüglich der Wülste (3, 3') in einem Bereich zwischen der Montagestellung und der Betriebsstellung der Wülste (3, 3') liegt.

13. Rad nach Anspruch 1, dadurch gekennzeichnet, dass der Reifen im radial inneren Wulstbereich Mittel zur Demontage, wie mehrere Vorsprünge (12) oder Rillen aufweist.

14. Rad nach Anspruch 1, dadurch gekennzeichnet, dass die axial innen liegenden Teile der Reifenwülste (3, 3') durch elastische Abdeckringe (11) bedeckt sind.

15. Rad nach Anspruch 1, dadurch gekennzeichnet, dass die Felgensitzflächen in Querrichtung zumindest teilweise gerade verlaufen.

16. Rad nach Anspruch 15, dadurch gekennzeichnet, dass die gerade verlaufenden Teile der Sitzflächen gegenüber der Horizontalen um bis zu 10° geneigt sind.

17. Rad nach Anspruch 1, dadurch gekennzeichnet, dass die Felgensitzflächen in Querrichtung gekrümmt, z.B. kreisbogenförmig verlaufen.

18. Rad nach Anspruch 1, dadurch gekennzeichnet, dass die Felge (5''') auf der radial äusseren Seite eine sich im wesentlichen von Felgenhorn (7) zu Felgenhorn (7) erstreckende, in Querrichtung gerade oder gewölbt verlaufende Stützfläche (14) aufweist.

19. Verfahren zur Montage eines Reifens auf eine Felge bei einem Rad nach Anspruch 1, dadurch gekennzeichnet, dass, nachdem die Felge in den Innenraum des Reifens bewegt worden ist, zunächst ein Wulst in die Montagestellung verschwenkt wird, danach an einer Stelle vollständig bis an die Felgensitzfläche geschoben und auf der gegenüberliegenden Seite über das Felgenhorn gehoben wird, anschliessend der Reifen bezüglich der Felge zentriert und der Wulst in die Betriebsstellung geschwenkt wird und zum Schluss mit dem zweiten Wulst entsprechend verfahren wird.

20. Luftbereiftes Fahrzeugrad mit einer starren einteiligen Felge und einem Gürtelreifen mit einer ein- oder mehrlagigen Karkasse (1) und mit zugfesten Kernringen (2) in den Wülsten (3), bei dem die Felge sich im wesentlichen radial nach aussen erstreckende Felgenhörner (7) und neben diesen am radial äusseren Umfang Sitzflächen für den Gürtelreifen aufweist, wobei beim montierten Reifen der Abstand «a» vom Mittelpunkt des Kernquerschnitts zum radial inneren Wulstrand grösser ist als der Abstand «b» zu einem axialen Wulstrand, so dass der Kernring (2) in diesem Bereich des Wulstes (3) exzentrisch gelagert ist, wobei der Wulst (3) bei der Montage des Reifens drehbar und/oder verschwenkbar ist, und dass seine Drehung oder Schwenkung aus der Montagestellung in die Betriebsstellung des Reifens in seinem Sitzflächenbereich erfolgen kann, dadurch gekennzeichnet, dass der Mittendurchmesser ($D_3$) der Kernringe (2) gleich oder wenig kleiner ist als der von den sich radial nach aussen erstreckenden Felgenhörnern (7) gebildete grösste Durchmesser ($D_4$), dass die Differenz zwischen dem Abstand «a» und dem Abstand «b» vom Mittelpunkt des Kernquerschnitts zum axial inneren Wulstrand derart gewählt ist, dass in der Montagestellung des Reifens der radial innere Reifendurchmesser im Wulstbereich um soviel grösser ist als der Durchmesser im Sitzflächenbereich, dass der Reifen über das jeweilige Felgenhorn (7) hebbar ist.

**Claims**

1. Vehicle wheel fitted with a pneumatic tyre, having a rigid, one-piece rim (5) and a belted tyre with a single-ply or multiple-ply carcase (1) and substantially inextensible and/or pressure-resistant bead cores (2) in the beads (3, 3', 3''), wherein the rim (5) has substantially inwardly extending rim flanges (7) and, adjacent thereto on the radially inner circumference, seating surfaces for the belted tyre, wherein the central diameter ($D_3$) of the bead cores (2) is exactly the same size as, or slightly larger than, the smallest diameter ($D_4$) formed by the radially inwardly extending rim flanges (7), characterised in that, when the tyre is assembled, the distance «a» from the centre of the core cross-section to the radially outer bead edge is greater than the distance «b» to the axially inner bead edge, so that the bead core (2) is eccentrically mounted in this region of the bead, the bead (3, 3', 3'') is rotatable and/or pivotable about an axis extending in the circumferential direction of the tyre during assembly of the tyre, and the difference between the distances «a» and «b» is selected in such a manner that, in the assembled position of the tyre, the radially outer tyre diameter ($D_1$) in the bead region is smaller than the diameter ($D_2$) in the supporting surface region by such an amount that the tyre is capable of being raised over the respective rim flange (7).

2. Wheel according to claim 1, characterised in that each bead (3) on the axially inner side abuts against portions (8) of the rim (5) which extend substantially radially in the cross-section, and in that the area defined by these portions (8), the rim seating surface and the rim flange (7) is filled in a form-fitting manner.

3. Wheel according to claim 1, characterised in that the diameter ($D_1$) is smaller than the central diameter ($D_2$) of the rim (5) in the region of the rim seating surfaces by an amount corresponding to ½–1½ times the diameter of the core cross-section.

4. Wheel according to claim 1, characterised in that the two given distances «a» and «b» differ from each other by an amount corresponding to ¼–¾ times the diameter of the core cross-section.

5. Wheel according to claim 1, characterised in that the intermediate values of the distances between the two given distances «a» and «b», which lie perpendicular to each other, change constantly, so that the bead edge in this region in the cross-section extends along a curved profile.

6. Wheel according to claim 5, characterised in that, when the tyre is assembled, the distance from the centre of the core cross-section to the axially outer bead edge is greater than the distance «a» from the centre to the radially outer bead edge.

7. Wheel according to claim 5, characterised in that, when the tyre is assembled, the distance from the centre of the core cross-section to the axially outer bead edge is shorter than the distance «a» from the centre to the radially outer bead edge.

8. Wheel according to claim 1, characterised in that the beads (3, 3') are rotatable about an axis extending through the centre of the core cross-section, namely rotatable about an angle between 45° and 90°.

9. Wheel according to claim 1, characterised in that the beads (3, 3') are rotatable about their core at angles between 45° and 90°, namely with a relative movement at the boundary face between the bead core (2) and the bead material surrounding it.

10. Wheel according to claim 1, characterised by a tyre having a ratio of height to width of 0.3 to 0.7.

11. Wheel according to claim 1, characterised in that the tyre is produced by casting.

12. Wheel according to claim 1, characterised in that the vulcanisation position of the tyre relative to the beads (3, 3') lies in a region between the assembly position and the operational position of the beads (3, 3').

13. Wheel according to claim 1, characterised in that the tyre in the radially inner bead region has means for disassembly, such as a plurality of projections (12) or grooves.

14. Wheel according to claim 1, characterised in that the axially inner portions of the tyre beads (3, 3') are covered by resilient cover rings (11).

15. Wheel according to claim 1, characterised in that the rim seating surfaces extend in the transverse direction at least partially in a straight line.

16. Wheel according to claim 15, characterised in that the portions of the seating surfaces which extend in a straight line are inclined at an angle of up to 10° relative to the horizontal.

17. Wheel according to claim 1, characterised in that the rim seating surfaces extend in the transverse direction in a curved manner, e.g. in an arcuate manner.

18. Wheel according to claim 1, characterised in that the rim (5''') on the radially outer side has a supporting surface (14) which extends substantially from rim flange (7) to rim flange (7) and extends in a straight or curved manner in the transverse direction.

19. Method of assembling a tyre on a rim for a wheel according to claim 1, characterised in that, once the rim has been moved into the interior of the tyre, a bead is initially pivoted into the assembly position, then pushed fully as far as the rim seating surface at one location and raised over the rim flange on the opposite side, and subsequently the tyre is centred with respect to the rim and the bead is pivoted into the operational position and will eventually travel with the second bead accordingly.

20. Vehicle wheel fitted with a pneumatic tyre, having a rigid, one-piece rim and a belted tyre with a single-ply or multiple-ply carcase (1) and substantially inextensible bead cores (2) in the beads (3), wherein the rim has substantially radially outwardly extending rim flanges (7) and, adjacent thereto on the radially outer circumference, seating surfaces for the belted tyre, wherein, when the tyre is assembled, the distance «a» from the centre of the core cross-section to the radially inner bead edge is greater than the distance «b» to an axial bead edge, so that the bead core (2) is eccentrically mounted in this region of the bead (3), wherein the bead (3) is rotatable and/or pivotable during the assembly of the tyre, and so that its rotation or pivotal movement from the assembly position into the operational position of the tyre may be effected in its seating surface region, characterised in that the central diameter ($D_3$) of the bead cores (2) is identical to, or slightly smaller than, the largest diameter ($D_4$) which is formed by the radially outwardly extending rim flanges (7), in that the difference between the distance «a» and the distance «b» from the centre of the core cross-section to the axially inner bead edge is selected in such a manner that, in the assembled position of the tyre, the radially inner tyre diameter in the bead region is greater than the diameter in the seating surface region by such an amount that the tyre is capable of being raised over the respective rim flange (7).

**Revendications**

1. Roue de véhicule avec une jante (5) rigide monobloc et un pneumatique ceinturé avec une carcasse à une ou plusieurs couches (1) et des tringles annulaires (2) résistant à la traction et/ou la compression dans les talons (3, 3', 3''), dans laquelle la jante (5) comporte des rebords (7) sensiblement radiaux vers l'intérieur et, à côté de ces derniers, des repos sur la circonférence radiale intérieure pour le pneumatique ceinturé, le diamètre médian ($D_3$) des tringles annulaires (2) étant égal ou légèrement supérieur au diamètre minimal ($D_4$) formé par les rebords (7) radiaux vers l'intérieur de la jante, ladite roue étant caractérisée en ce que dans l'état monté du pneumatique, la distance «a» du centre de la section de la tige au bord radial extérieur du talon est supérieure à la distance «b» au bord axial intérieur, de sorte que la tige annulaire (2) est disposée excentriquement dans cette zone du talon; le talon (3, 3', 3'') peut tourner et/ou pivoter autour d'un axe dirigé suivant le sens circonférentiel du pneumatique, pendant le montage de ce dernier; et la différence de distance «a» et «b» est choisie de façon que dans la position de montage du pneumatique, le diamètre radial extérieur ($D_1$) du pneumatique dans la zone du talon soit inférieur au diamètre ($D_2$) dans la zone de la base d'une valeur telle que le pneumatique peut être soulevé par dessus le rebord (7) correspondant de la jante.

2. Roue selon revendication 1, caractérisée en ce que chaque talon (3) s'applique sur la face axiale intérieure de pièces (8) de section sensiblement radiale de la jante (5); et l'espace délimité par lesdites pièces (8), le repos et le rebord (7) de la jante est rempli avec sûreté de forme.

3. Roue selon revendication 1, caractérisée en ce que le diamètre ($D_1$) est inférieur de ½ à ¾ fois le diamètre de la section de la tige au diamètre moyen ($D_2$) de la jante (5) dans la zone des repos de la jante.

4. Roue selon revendication 1, caractérisée en ce que les deux distances «a» et «b» diffèrent de ¼ à ¾ fois le diamètre de la section de la tige.

5. Roue selon revendication 1, caractérisée en ce que les valeurs intermédiaires des distances comprises entre les deux distances perpendiculaires précitées «a» et «b» varient continûment, de sorte que le bord du talon dans cette zone varie en coupe suivant une courbe incurvée.

6. Roue selon revendication 5, caractérisèe en ce que sur le pneumatique monté, la distance du centre de la section de la tige au bord axial extérieur du talon est supérieure à la distance «a» du centre au bord radial extérieur du talon.

7. Roue selon revendication 5, caractérisée en ce que sur le pneumatique monté, la distance du centre de la section de la tige au bord axial extérieur du talon est inférieure à la distance «a» du centre au bord radial extérieur du talon.

8. Roue selon revendication 1, caractérisée en ce que les talons (3, 3') peuvent tourner autour d'un axe passant par le centre de la section de la tringle, d'un angle compris entre 45 et 90°.

9. Roue selon revendication 1, caractérisée en ce que les talons (3, 3') peuvent tourner autour de leur tringle d'un angle compris entre 45 et 90°, avec un mouvement relatif sur la surface de séparation entre la tringle annulaire (2) et le matériau du talon qui l'entoure.

10. Roue selon revendication 1, caractérisée par un pneumatique ayant un rapport hauteur/largeur de 0,3 à 0,7.

11. Roue selon revendication 1, caractérisée en ce que le pneumatique est produit par coulée.

12. Roue selon revendication 1, caractérisée en ce que la position de vulcanisation du pneumatique est relativement aux talons (3, 3') située dans une zone comprise entre la position de montage et la position de service des talons (3, 3').

13. Roue selon revendication 1, caractérisée en ce que le pneumatique comporte dans la zone radiale intérieure des talons des moyens de démontage, tels que plusieurs saillies (12) ou rainures.

14. Roue selon revendication 1, caractérisée en ce que les parties axiales intérieures des talons (3, 3') du pneumatique sont recouvertes par des bagues élastiques (11) de recouvrement.

15. Roue selon revendication 1, caractérisée en ce que les repos de la jante sont suivant le sens transversal au moins partiellement rectilignes.

16. Roue selon revendication 15, caractérisée en ce que les parties rectilignes des repos sont inclinées de 10° au maximum par rapport à l'horizontale.

17. Roue selon revendication 1, caractérisée en ce que les repos de la jante sont courbes suivant le sens transversal, par exemple en arc de cercle.

18. Roue selon revendication 1, caractérisée en ce que la jante (5''') comporte sur la face radiale extérieure une base (14) rectiligne ou bombée suivant le sens transversal et s'étendant sensiblement d'un rebord (7) à l'autre (7).

19. Procédé de montage d'un pneumatique sur une jante dans le cas d'une roue selon revendication 1, ledit procédé étant caractérisé en ce qu'après l'introduction de la jante à l'intérieur du pneumatique, un talon est d'abord pivoté dans la position de montage, puis introduit totalement en un point jusqu'au repos sur la jante et relevé par dessus le rebord de la jante du côté opposé, et le pneumatique est enfin centré par rapport à la jante, le talon est pivoté dans la position de service puis les mêmes opérations sont répétées pour le second talon.

20. Roue de véhicule avec une carcasse monobloc rigide et un pneumatique ceinturé avec une carcasse à une ou plusieurs couches (1) et des tringles annulaires (2) résistant à la traction dans les talons (3), dans laquelle la jante comporte des rebords (7) sensiblement radiaux vers l'extérieur et, à côté de ces derniers, des repos sur la circonférence radiale extérieure pour le pneumatique ceinturé; sur le pneumatique monté, la distance «a» du centre de la section de la tringle au bord radial intérieur du talon est supérieure à la distance «b» à un bord axial du talon, de sorte que la tringle annulaire (2) est logée excentriquement dans cette zone du talon (3), qui peut être tournée et/pivotée lors du montage du pneumatique; et la rotation ou le pivotement à partir de la position de montage vers la position de service du pneumatique peut s'effectuer dans la zone des repos, ladite roue étant caractérisée en ce que le diamètre médian ($D_3$) des tringles annulaires (2) est égal ou légèrement inférieur au diamètre maximal ($D_4$) formé par les rebords (7) radiaux vers l'extérieur de la jante; la différence entre la distance «a» et la distance «b» du centre de la section de la tringle au bord axial intérieur du talon est choisie de façon que dans la position de montage du pneumatique, le diamètre radial intérieur de ce dernier dans la zone du talon soit suffisamment supérieur du diamètre de la zone des repos pour permettre de lever le pneumatique par dessus le rebord (7) correspondant de la jante.

FIG.1

0 111 118

FIG.2

FIG.3

# FIG.4

# FIG.5

0 111 118

FIG.6

FIG.7

FIG.8

13

# FIG. 9